# EUROPEAN PATENT APPLICATION

(11) **EP 4 611 316 A1**
(43) Date of publication of application: **03.09.2025**
(21) Application number: 23882277.9
(22) Date of filing: 14.09.2023
(51) Int. Cl.: H04L 25/02, H04L 12/28

(54) **COMMUNICATION CIRCUIT, DEVICE, COMMUNICATION SYSTEM, COMMUNICATION CIRCUIT CONTROL METHOD, AND PROGRAM**

(30) Priority: 25.10.2022 JP 2022170864
(71) Applicant: Panasonic Intellectual Property Management Co., Ltd., Kadoma-shi, Osaka 571-0057 (JP)
(72) Inventor: NAMBA, Akihiko, Kadoma-shi, Osaka 571-0057 (JP); NAKANO, Shinsuke, Kadoma-shi, Osaka 571-0057 (JP)
(74) Representative: SSM Sandmair
(86) International application number: PCT/JP2023/033553
(87) International publication number: WO 2024/090064

(57) **Abstract**

Connection and disconnection between a termination resistor of a communication circuit and a transmission path are switched without causing a communication error. Communication circuit (6A) includes communication part (10), termination resistor (12), switch (13), detector (15), and controller (16). Communication part (10) is provided in device (2) connected to transmission path (3), and communicates with another communication part (10) provided in another device (2) connected to transmission path (3) through transmission path (3). Termination resistor (12) is connected to transmission path (3). Switch (13) switches between connection and disconnection between termination resistor (12) and transmission path (3). Detector (15) detects total resistance value (R1) of all resistors connected to transmission path (3) in a state where termination resistor (12) and transmission path (3) are connected. Controller (16) controls switching between connection and disconnection between termination resistor (12) and transmission path (3) with switch (13) based on a result of the detection of detector (15).

## Description

### TECHNICAL FIELD

The present disclosure generally relates to a communication circuit, a device, a communication system, a method for controlling a communication circuit, and a program, and more particularly to a communication circuit including a termination resistor, a device including the communication circuit, a communication system including the device, a method for controlling the communication circuit, and a program.

### BACKGROUND ART

PTL 1 describes a termination resistor setting device (communication circuit) including a controller, a communication controller, a termination resistor, and a switch circuit. The controller controls the communication controller to transmit data to a LAN line (transmission path) at start of operation. Then, when the controller acquires a communication error through the communication controller, the controller recognizes that the termination resistor is not connected to a data input-output terminal of the communication controller, and causes the switch circuit to be turned on. When data transmission is successful, the controller recognizes that another termination resistor different from the termination resistor is connected to the data input-output terminal of the communication controller, and causes the switch circuit to be turned off.

### Citation List

### Patent Literature

PTL 1: Unexamined Japanese Patent Publication No. H09-326811

### SUMMARY OF THE INVENTION

The termination resistor setting device described above is configured to switch the termination resistor between ON and OFF after the communication error is detected, so that the communication may be interrupted to become unstable, or malfunction of the device may be caused.

It is an object of the present disclosure to provide a communication circuit, a device, a communication system, a method for controlling a communication circuit, and a program, which are capable of switching between connection and disconnection between a termination resistor and a transmission path without causing a communication error.

A communication circuit according to an aspect of the present disclosure includes a communication part, a termination resistor, a switch, a detector, and a controller. The communication part is provided in a device connected to a transmission path, and communicates with another communication part through the transmission path, the other communication part being provided in another device connected to the transmission path. The termination resistor is connected to the transmission path. The switch switches between connection and disconnection between the termination resistor and the transmission path. The detector detects a total resistance value of all resistors connected to the transmission path in a state where the termination resistor and the transmission path are connected. The controller controls switching between connection and disconnection between the termination resistor and the transmission path with the switch based on a result of the detection of the detector.

A device according to another aspect of the present disclosure includes the communication circuit and a functional part. The functional part is connected to the communication part of the communication circuit to exchange a signal with the communication part, and executes a predetermined function.

A communication system according to yet another aspect of the present disclosure includes a transmission path and three or more devices. The three or more devices are connected to a transmission path. At least one of the three or more devices is the device of the above aspect, and the rest of the three or more devices include a termination resistor that is always connected to the transmission path.

A method for controlling a communication circuit according to yet another aspect of the present disclosure is for controlling the communication circuit including a communication part, a termination resistor, and a switch. The communication part is provided in a device connected to a transmission path, and communicates with another communication part through the transmission path, the other communication part being provided in another device connected to the transmission path. The termination resistor is connected to the transmission path. The switch switches between connection and disconnection between the termination resistor and the transmission path. The method for controlling the communication circuit includes a detection step and a control step. The detection step is performed to detect a total resistance value of all resistors connected to the transmission path in a state where the termination resistor and the transmission path are connected. The control step is performed to control switching between connection and disconnection between the termination resistor and the transmission path with the switch based on a result of the detection in the detection step.

A program according to yet another aspect of the present disclosure causes one or more processors to execute the method for controlling a communication circuit according to the above aspect.

The present disclosure has an advantage of enabling switching between connection and disconnection between a termination resistor and a transmission path without causing a communication error.

### BRIEF DESCRIPTION OF THE DRAWINGS

Fig. 1 is a configuration diagram of a communication system according to an exemplary embodiment.
Fig. 2 is a flowchart for illustrating operation of a communication circuit of a first device provided in the communication system of the exemplary embodiment.
Fig. 3 is a block diagram of a communication circuit according to Modification 2.
Fig. 4 is a block diagram of a communication circuit according to Modification 3.

### DESCRIPTION OF EMBODIMENT

Hereinafter, a communication circuit, a device, a communication system, a method for controlling a communication circuit, and a program according to an exemplary embodiment will be described. The exemplary embodiment described below is merely an example of various exemplary embodiments of the present disclosure. The following exemplary embodiment can be variously changed in accordance with a design and the like as long as an object of the present disclosure can be achieved.

### (Exemplary embodiments)

### (1) Overview

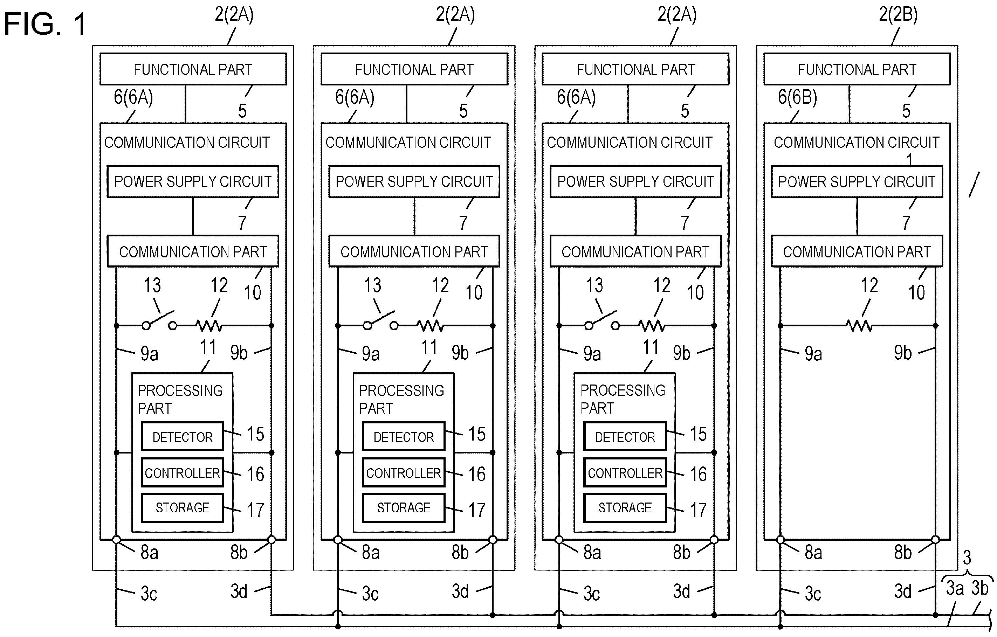

Fig. 1 is a configuration diagram of communication system 1 according to an exemplary embodiment. As illustrated in Fig. 1, communication circuit 6A according to the exemplary embodiment includes communication part 10, termination resistor 12, switch 13, detector 15, and controller 16. Communication part 10 is provided in first device 2A connected to transmission path 3, and communicates with another communication part 10, which is provided in another device 2 connected to transmission path 3, through transmission path 3. Termination resistor 12 is connected to transmission path 3. Switch 13 switches between connection and disconnection between termination resistor 12 and transmission path 3. Detector 15 detects total resistance value R1 of all resistors connected to transmission path 3 in a state where termination resistor 12 and transmission path 3 are connected. Controller 16 controls switching between connection and disconnection between termination resistor 12 and transmission path 3 with switch 13 based on a result of the detection of detector 15.

According to this configuration, total resistance value R1 of all resistors connected to transmission path 3 (i.e., a resistance value of a combined resistor of all termination resistors 12) is detected, and switching between connection and disconnection between termination resistor 12 and transmission path 3 with switch 13 is controlled based on a result of the detection. Thus, the connection and the disconnection between termination resistor 12 and transmission path 3 can be switched without causing a communication error in communication part 10.

### (2) Configuration of communication system

With reference to Fig. 1, communication system 1, first device 2A, and communication circuit 6A according to the exemplary embodiment will be described in detail.

Communication system 1 includes a plurality of devices 2 that executes functions of devices 2 while communicating with each other through transmission path 3. The plurality of devices 2 is servo amplifiers and various sensors used in a semiconductor manufacturing apparatus or a production robot, for example.

Communication system 1 includes transmission path 3 and the plurality of devices 2.

Transmission path 3 is a serial communication cable in conformity with serial communication standard RS485, for example. More specifically, transmission path 3 is a differential transmission path (referred to also as a differential line) having characteristic impedance R0 (e.g., R0 = 100 Ω) of the differential line. Transmission path 3 being the differential transmission path includes two signal lines 3a, 3b, and transmits a signal using a potential difference between two signal lines 3a, 3b. However, transmission path 3 is not limited to the differential transmission path, and may be a single-ended transmission path. The single-ended transmission path has one signal line, and transmits a signal using a potential difference between the one signal line and the ground. Transmission path 3 may be another communication cable such as a local area network (LAN) cable.

The plurality of (e.g., three or more) devices 2 includes at least one first device 2A, and second device 2B that is the rest of the devices (i.e., device 2 other than first device 2A). The illustrated example illustrates three first devices 2A and one second device 2B. Each of the plurality of devices 2 includes communication circuit 6 as described later. In the following description, communication circuit 6 of first device 2A may be referred to as communication circuit 6A, and communication circuit 6 of second device 2B may be referred to as communication circuit 6B.

First device 2A executes a predetermined function of first device 2A while communicating with another device 2 connected to transmission path 3 through transmission path 3. When first device 2A is a servo amplifier, first device 2A has a predetermined function of controlling a servo motor to be controlled by the servo amplifier. When first device 2A is a sensor that detects a predetermined physical quantity, first device 2A has a predetermined function of detecting the predetermined physical quantity. First device 2A includes termination resistor 12, and has a function of automatically switching between connection and disconnection between termination resistor 12 and transmission path 3.

First device 2A includes functional part 5 and communication circuit 6A (6).

Functional part 5 executes the predetermined function described above. For example, when first device 2A is a servo amplifier, functional part 5 is a controller that controls communication with another servo amplifier or a servo motor. Functional part 5 also switches between connection and disconnection between termination resistor 12 and transmission path 3 described later. When first device 2A is a sensor that detects a predetermined physical quantity, functional part 5 is a detector that detects a physical quantity to be detected. Functional part 5 is connected to communication circuit 6A to execute the predetermined function while transmitting and receiving signals to and from communication circuit 6A. More specifically, functional part 5 executes a predetermined function according to control from communication circuit 6A. Alternatively, functional part 5 executes a predetermined function to transmit an execution result from communication circuit 6A to another device 2 through transmission path 3. The predetermined function is not particularly limited, and is different from that of communication circuit 6A.

Communication circuit 6A communicates with communication circuit 6 of another device 2 through transmission path 3. Communication circuit 6A includes power supply circuit 7, two communication terminals 8a, 8b, two wirings 9a, 9b, communication part 10, processing part 11, termination resistor 12, and switch 13.

Power supply circuit 7 generates DC voltage having voltage required by first device 2A from power supply voltage supplied from an external power supply (DC power supply or AC power supply). Then, power supply circuit 7 supplies the generated DC voltage to communication part 10 and processing part 11.

Two communication terminals 8a, 8b are respectively connected to two signal lines 3a, 3b constituting transmission path 3. More specifically, two communication terminals 8a, 8b correspond respectively to two signal lines 3a, 3b constituting transmission path 3, and are connected to corresponding signal lines 3a, 3b through branch signal lines 3c, 3d, respectively.

Communication part 10 is provided in device 2 (more specifically, first device 2A) connected to transmission path 3. Communication part 10 communicates with communication part 10 of another device 2 through transmission path 3. Communication part 10 also exchanges signals with functional part 5 to be controlled by functional part 5 or to transmit an execution result of functional part 5 to the outside through transmission path 3. Communication part 10 is connected to two communication terminals 8a, 8b through two wirings 9a, 9b, respectively. That is, communication part 10 is connected to transmission path 3 through two wirings 9a, 9b and two branch signal lines 3c, 3d. On power-up of first device 2A, communication part 10 energizes transmission path 3 with a detection current through two wirings 9a, 9b and two branch signal lines 3c, 3d in an ON state of switch 13 (i.e., a state where termination resistor 12 is connected to transmission path 3). The detection current is for detector 15 described later to detect total resistance value R1 of transmission path 3 described later.

Termination resistor 12 is for suppressing generation of a reflected wave of the transmission signal at an end of transmission path 3. Termination resistor 12 is connected across two wirings 9a, 9b. Termination resistor 12 is connected to transmission path 3 through two wirings 9a, 9b and two branch signal lines 3c, 3d. Termination resistor 12 has a value (e.g., 100 Ω) equal to a value of characteristic impedance R0 (e.g., R0 = 100 Ω) of the differential line of transmission path 3, for example.

Switch 13 switches between connection and disconnection between termination resistor 12 and transmission path 3 according to control of processing part 11 (more specifically, controller 16 described later). Switch 13 is switched between ON and OFF under the control of processing part 11. Switch 13 is connected in series to termination resistor 12. More specifically, switch 13 is connected between one wiring 9a and one end part of termination resistor 12. Switch 13 is switched from OFF to ON according to the control of processing part 11 to connect termination resistor 12 between two wirings 9a, 9b, thereby connecting termination resistor 12 to transmission path 3. In contrast, switch 13 is switched from ON to OFF according to the control of processing part 11 to disconnect termination resistor 12 from one wiring 9a, and thereby disconnecting termination resistor 12 from transmission path 3.

The connection of termination resistor 12 to transmission path 3 means that termination resistor 12 is electrically connected between two signal lines 3a, 3b (i.e., termination resistor 12 is connected to transmission path 3 to function as a resistor). The disconnection of termination resistor 12 from transmission path 3 means that the one end part of termination resistor 12 is disconnected from one wiring 9a (i.e., termination resistor 12 is disconnected from transmission path 3 to cause termination resistor 12 not to function as a resistor).

Switch 13 is a semiconductor switch, for example. Consequently, switch 13 can be downsized. More specifically, when switch 13 is an N-channel MOSFET, for example, voltage drop due to a depletion layer capacitance of the N-channel MOSFET can be reduced, and thus signal quality of communication in transmission path 3 can be improved.

Processing part 11 detects total resistance value R1 of transmission path 3 and performs ON-OFF control of switch 13. Processing part 11 includes detector 15, controller 16, and storage 17.

Detector 15 detects resistance value (referred to below as a total resistance value) R1 of all resistors connected to transmission path 3 (i.e., the combined resistor of all termination resistors 12 connected to transmission path 3) in an ON state of switch 13 (i.e., a state where termination resistor 12 and transmission path 3 are connected). In more detail, detector 15 detects voltage value V1 of voltage across both ends of termination resistor 12 in the ON state of switch 13, and detects total resistance value R1 based on detected voltage value V1. Specifically, detector 15 detects voltage value V1 of the voltage across termination resistor 12 in a state where communication part 10 energizes transmission path 3 with the detection current. Then, detector 15 detects (more specifically, calculates) total resistance value R1 (= V1/I1) of all resistors based on detected voltage value V1 and current value I1 of the detection current.

Controller 16 controls switching between connection and disconnection between termination resistor 12 and transmission path 3 with switch 13 based on a result of the detection (total resistance value R1) of detector 15. That is, magnitude comparison between total resistance value R1 and threshold Rs is performed, and switching between the connection and the disconnection between termination resistor 12 and transmission path 3 with switch 13 is controlled based on a result of the comparison.

Here, threshold Rs has a value equal to the total resistance value of transmission path 3 when two termination resistors 12 (i.e., termination resistors 12 of two devices 2) are connected to transmission path 3, for example. When characteristic impedance R0 of the differential line of transmission path 3 is 100 Ω, two termination resistors 12 of 100 Ω may be connected in parallel to transmission path 3 to optimize signal quality of transmission path 3. That is, termination resistor 12 of each of two devices 2 may be connected to transmission path 3. This connection causes transmission path 3 to have a total resistance value of 50 Ω due to parallel connection of two resistors of 100 Ω. Thus, threshold Rs is set to 50 Ω in this connection. When the number of termination resistors 12 (100 Ω) connected to transmission path 3 is two or less, the total resistance value of transmission path 3 is 50 Ω or more, and when the number is more than two, the total resistance value of transmission path 3 is less than 50 Ω. The number is preferably two by which termination resistors connected to the line are located at both ends of transmission path 3, thereby enabling better signal quality to be obtained. Although threshold Rs has the value equal to the total resistance value of transmission path 3 when two termination resistors 12 are connected to transmission path 3 in the present exemplary embodiment, it can be set to a value equal to a total resistance value of transmission path 3 when N (N: natural number) termination resistors 12 are connected to transmission path 3.

More specifically, when total resistance value R1 detected by detector 15 is equal to or greater than threshold Rs, controller 16 determines that two or less termination resistors 12 including termination resistor 12 of first device 2A are already connected to transmission path 3. Then, this determination result causes controller 16 to control switch 13 so that termination resistor 12 and transmission path 3 are connected. That is, controller 16 turns on switch 13. Switch 13 is turned on when communication part 10 energizes transmission path 3 with the detection current in the present exemplary embodiment, and thus the ON state is kept. In contrast, when total resistance value R1 detected by detector 15 is less than threshold Rs, controller 16 determines that more than two termination resistors 12 including termination resistor 12 of first device 2A are already connected to transmission path 3. Then, this determination result causes controller 16 to control switch 13 so that termination resistor 12 and transmission path 3 are disconnected. That is, controller 16 turns off switch 13.

Examples of a method for causing by controller 16 to read voltage value V1 of voltage generated between communication terminals 8a, 8b (i.e., between signal lines 3a,3b) by energizing transmission path 3 with the detection current include a method for causing an analog-digital (AD) converter to read voltage value V1, and a method for causing a comparator to determine whether voltage value V1 is H (High) or L (Low) with respect to a specified voltage value and read a result of the determination.

storage 17 is an electrically rewritable nonvolatile semiconductor memory, for example. storage 17 stores information (impedance information) related to characteristic impedance R0 of the differential line of transmission path 3. Controller 16 calculates threshold Rs based on the information related to characteristic impedance R0 of the differential line stored in storage 17, and performs the magnitude comparison between total resistance value R1 and threshold Rs as described above using calculated threshold Rs.

The information related to characteristic impedance R0 of the differential line may be written in storage 17 from the outside by a person using a storage medium (e.g., a USB memory), for example. In this case, first device 2A includes an external connector that detachably connects the storage medium. Alternatively, first device 2A may be accessed from an external device through transmission path 3 so that the information related to characteristic impedance R0 of the differential line is written in storage 17.

Each of functional part 5, processing part 11, and communication part 10 is mainly composed of a computer system including one or more processors and one or more memories. Processing part 11 has functions, all of which may be composed of a computer system, or some of which may be composed of a computer system. Communication part 10 is not necessarily composed of a computer system. When one or more processors execute a program recorded in a memory in each of functional part 5, processing part 11, and communication part 10, the functions of processing part 11 and communication part 10 are implemented. The program may be recorded in advance in the memory, may be provided through a telecommunication line such as the Internet, or may be provided by being recorded in a non-transitory recording medium such as a memory card.

Second device 2B executes a predetermined function of second device 2B while communicating with another device 2 connected to transmission path 3 through transmission path 3. When second device 2B is a servo amplifier, second device 2B has the predetermined function of controlling a servomotor to be controlled by the servo amplifier. When second device 2B is a sensor that detects a predetermined physical quantity, the second device 2B has a function of detecting the predetermined physical quantity. Second device 2B includes termination resistor 12 that is always connected to transmission path 3 while being connected to transmission path 3. That is, second device 2B has a configuration without switch 13 and processing part 11 in first device 2A, and does not have a function of energizing transmission path 3 with the detection current from communication part 10.

Second device 2B includes functional part 5 and communication circuit 6B (6).

Functional part 5 executes a predetermined function of second device 2B. For example, when second device 2B is a servo amplifier, functional part 5 is a controller that controls a servo motor. When second device 2B is a sensor that detects a predetermined physical quantity, functional part 5 is a detector that detects a physical quantity to be detected. Functional part 5 is connected to communication circuit 6B to execute the predetermined function while transmitting and receiving signals to and from communication circuit 6B. More specifically, functional part 5 executes a predetermined function according to control from communication circuit 6B. Alternatively, functional part 5 executes a predetermined function to transmit an execution result from communication circuit 6B to another device 2 through transmission path 3. The predetermined function is not particularly limited, and is different from that of communication circuit 6B.

Communication circuit 6B communicates with communication circuit 6 of another device 2 through transmission path 3. Communication circuit 6B includes power supply circuit 7, two communication terminals 8a, 8b, two wirings 9a, 9b, communication part 10, and termination resistor 12. That is, second device 2B has a configuration without switch 13 and processing part 11 in first device 2A. Communication part 10 of second device 2B is configured similarly to communication part 10 of first device 2A except that the communication part does not have a function of energizing transmission path 3 with the detection current. That is, communication part 10 of second device 2B does not energize transmission path 3 with the detection current. Second device 2B has the configuration in which the same components as those of first device 2A are denoted by the same reference numerals, and the description thereof will not be described.

Second device 2B includes termination resistor 12 that is always connected between two wirings 9a, 9b. Consequently, when the second device is connected to transmission path 3 through two branch signal lines 3c, 3d, termination resistor 12 is automatically always connected to transmission path 3. Termination resistor 12 of second device 2B has a value that is set equal to a value of characteristic impedance R0 of the differential line of transmission path 3, for example, as in termination resistor 12 of first device 2A.

### (3) Operation of communication circuit of first device

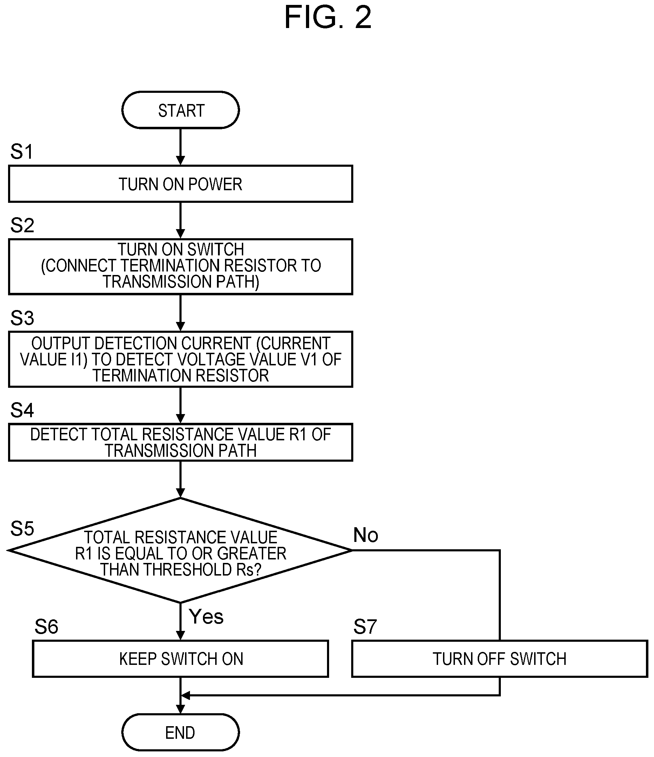

With reference to Fig. 2, operation of communication circuit 6A of first device 2A will be described. Fig. 2 is a flowchart for illustrating the operation of communication circuit 6A of first device 2A provided in communication system 1 according to the exemplary embodiment.

When power of first device 2A is turned on (S1), controller 16 turns on switch 13 (S2). Consequently, termination resistor 12 is connected to transmission path 3. When the power is turned on, communication part 10 energizes transmission path 3 with the detection current (current value I1) through wirings 9a, 9b and branch signal lines 3c, 3d, and detector 15 detects voltage value V1 of voltage generated across termination resistor 12 by the energization (S3). Then, detector 15 detects total resistance value R1 (= V1/I1) of all resistors connected to transmission path 3 based on detected voltage value V1 and current value I1 of the detection current (S4).

Then, controller 16 controls switching between connection and disconnection between termination resistor 12 and transmission path 3 with switch 13 based on a result of the detection (total resistance value R1) of detector 15 (S5). More specifically, when total resistance value R1 detected by detector 15 is equal to or greater than threshold Rs (S5: Yes), controller 16 determines that two or less termination resistors 12 are connected to transmission path 3. Then, this determination result causes controller 16 to control switch 13 in an ON state so that termination resistor 12 and transmission path 3 are connected. That is, controller 16 keeps switch 13 ON (S6). In contrast, when total resistance value R1 detected by detector 15 is less than threshold Rs (S5: No), controller 16 determines that more than two termination resistors 12 are connected to transmission path 3. Then, this determination result causes controller 16 to control switch 13 in an OFF state so that termination resistor 12 and transmission path 3 are disconnected (S7). Then, the processing ends.

### (4) Method for controlling communication circuit, program, and the like of

Functions similar to those of communication circuit 6A according to the above exemplary embodiment may be implemented by a method for controlling communication circuit 6A, a computer program (program), a non-transitory recording medium recording the computer program, or the like.

A method for controlling a communication circuit according to an aspect controls switching between connection and disconnection between termination resistor 12 and transmission path 3 with switch 13 in communication circuit 6A. Communication circuit 6A includes communication part 10, termination resistor 12, and switch 13. Communication part 10 is provided in device 2 connected to transmission path 3, and communicates with another communication part 10, which is provided in another device 2 connected to transmission path 3, through transmission path 3. Termination resistor 12 is connected to transmission path 3. The method for controlling a communication circuit includes a detection step and a control step. The detection step is performed to detect total resistance value R1 of all resistors connected to transmission path 3 in a state where termination resistor 12 and transmission path 3 are connected. The control step is performed to control switching between connection and disconnection between termination resistor 12 and transmission path 3 with switch 13 based on a result of the detection in the detection step.

A program according to an aspect causes one or more processors to execute the method for controlling a communication circuit.

A non-transitory recording medium according to an aspect records the program for causing one or more processors to execute the method for controlling a communication circuit.

### (5) Modifications

Next, modifications of the present exemplary embodiment will be described. In the following description, parts different from those of the above exemplary embodiment will be mainly described, and the same parts as those of the above exemplary embodiment will be denoted by the same reference numerals, and a drawing and description may be eliminated. The above exemplary embodiment and the modifications below can be implemented in combination.

### (Modification 1)

Communication circuit 6A of the above exemplary embodiment is configured such that when power of first device 2A is turned on, switch 13 switches between connection and disconnection between termination resistor 12 and transmission path 3. In contrast, communication circuit 6A of Modification 1 is configured such that switch 13 periodically switches between connection and disconnection between termination resistor 12 and transmission path 3. More specifically, Modification 1 is configured such that detector 15 periodically detects total resistance value R1 of transmission path 3 in a state where termination resistor 12 and transmission path 3 are connected. Every time detector 15 detects total resistance value R1 of transmission path 3, controller 16 controls switching between connection and disconnection between termination resistor 12 and transmission path 3 with switch 13 based on a result of the detection of detector 15.

Modification 1 enables periodical switching between connection and disconnection between termination resistor 12 and transmission path 3 with switch 13. As a result, even when first device 2A including communication circuit 6A of the present disclosure is connected to transmission path 3 and then second device 2B having no function of disconnecting termination resistor 12 is connected to transmission path 3, the number of termination resistors 12 connected to transmission path 3 can be adjusted to an optimum number by switching between connection and disconnection between termination resistor 12 and transmission path 3 in communication circuit 6A of the present disclosure.

### (Modification 2)

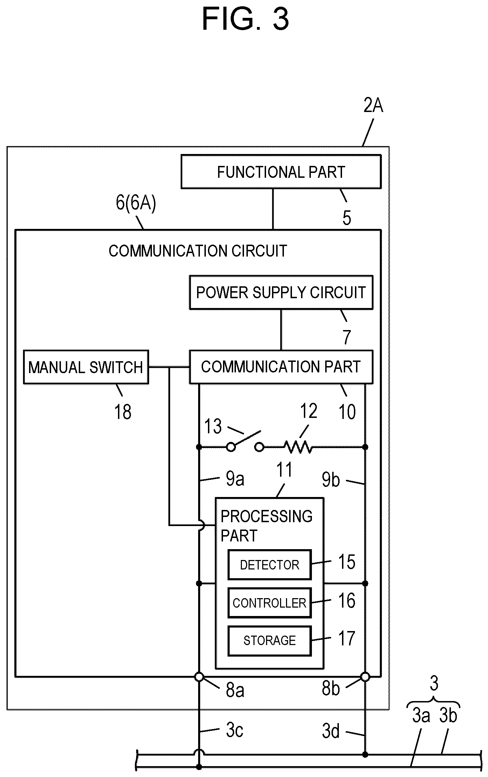

Fig. 3 is a block diagram of communication circuit 6A according to Modification 2. As illustrated in Fig. 3, communication circuit 6A of Modification 2 further includes manual switch 18 that switches between an automatic mode and a forcible mode in communication circuit 6A of the first exemplary embodiment.

The automatic mode allows controller 16 to control switching between connection and disconnection between termination resistor 12 and transmission path 3 with switch 13 based on a result of the detection of detector 15 as described in the above exemplary embodiment. Then, the forcible mode allows controller 16 to control switch 13 in an ON state to cause termination resistor 12 and transmission path 3 to be forcibly connected.

That is, the automatic mode allows communication part 10 to energize transmission path 3 with the detection current through wirings 9a, 9b and branch signal lines 3c, 3d. Then, detector 15 detects voltage value V1 of voltage generated in termination resistor 12 by the energization, and detects total resistance value R1 of transmission path 3 based on detected voltage value V1 and current value I1 of the detection current. Then, controller 16 performs a result of magnitude comparison between total resistance value R1 and threshold Rs, and controls ON and OFF of switch 13 based on a result of the comparison. In contrast, the forcible mode allows controller 16 to control switch 13 in an ON state so that termination resistor 12 and transmission path 3 are connected, without performing the above processing of each of communication part 10, detector 15, and controller 16.

Modification 2 enables an operation mode of communication circuit 6A to be switched between the automatic mode and the forcible mode with manual switch 18. When the operation mode of communication circuit 6A is switched to the forcible mode, termination resistor 12 can be forcibly connected to transmission path 3. Consequently, when first device 2A including communication circuit 6A of the present disclosure is connected to an end of transmission path 3, termination resistor 12 and transmission path 3 can be forcibly connected by manual switch 18. That is, termination resistor 12 of first device 2A connected to the end of transmission path 3 can be forcibly connected to transmission path 3.

### (Modification 3)

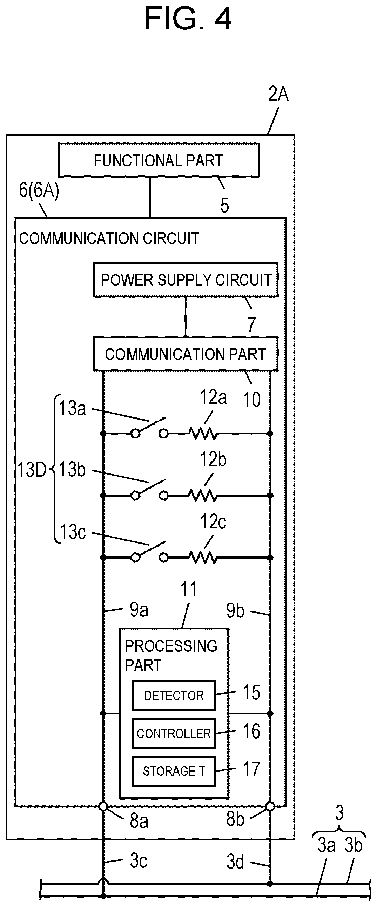

Fig. 4 is a block diagram of communication circuit 6A according to Modification 3. Although communication circuit 6A of the above exemplary embodiment includes one termination resistor 12 (see Fig. 1), the communication circuit 6A of Modification 3 includes a plurality of termination resistors 12a, 12b, and 12c having resistance values different from each other as illustrated in Fig. 4. Then, switch 13D of Modification 3 selects one of the plurality of termination resistors 12a to 12c based on control of controller 16, and switches between connection and disconnection between the selected termination resistor and transmission path 3.

More specifically, each of termination resistors 12a to 12c is connected in parallel between two wirings 9a, 9b. Switch 13D includes a plurality of switches 13a to 13c corresponding to the plurality of termination resistors 12a to 12c, respectively. Switches 13a, 13b, and 13c are provided between one wiring 9a and corresponding termination resistors 12a, 12b, and 12c. When each of switches 13a to 13c is turned on and off, conduction and interruption are performed between the corresponding one of termination resistors 12a to 12c and one wiring 9a. Consequently, each of switches 13a to 13c switches between connection and disconnection between the corresponding one of termination resistors 12a, 12b, and 12c and transmission path 3.

When power of first device 2A is turned on, controller 16 of the present modification controls the plurality of switches 13a to 13c to select one termination resistor to be used among the plurality of termination resistors 12a to 12c. More specifically, controller 16 turns on a switch corresponding to one termination resistor to be used among the plurality of switches 13a to 13c, and turns off switches corresponding to remaining termination resistors not to be used. Consequently, only the one termination resistor to be used among the plurality of termination resistors 12a to 12c is connected to transmission path 3.

For example, controller 16 selects a termination resistor from among the plurality of termination resistors 12a to 12c as the one termination resistor to be used, the termination resistor having a resistance value closest to a resistance value specified by the impedance information (information related to characteristic impedance R0 of the differential line) stored in storage 17. That is, the termination resistor matching characteristic impedance R0 of the differential line of transmission path 3 is automatically selected from among the plurality of termination resistors 12a to 12c.

Modification 3 enables an optimum termination resistor among the plurality of termination resistors 12a to 12b to be connected to the transmission path. Consequently, communication circuit 6A of the present disclosure can be made to correspond to various transmission paths 3 different in characteristic impedance R0 of the differential line.

### (Modification 4)

Communication circuit 6A of the above exemplary embodiment is configured such that controller 16 performs magnitude comparison between total resistance value R1 of transmission path 3 and threshold Rs, and controls switching between connection and disconnection between termination resistor 12 and transmission path 3 with switch 13 based on a result of the comparison. In contrast, communication circuit 6A of Modification 4 is configured such that controller 16 performs magnitude comparison between number N1 of termination resistors 12 connected to transmission path 3 and threshold Ns, and controls switching between connection and disconnection between termination resistors 12 and transmission path 3 with switch 13 based on a result of the comparison. Communication circuit 6A of Modification 4 is identical in configuration to the communication circuit 6A of the above exemplary embodiment.

More specifically, controller 16 in Modification 4 calculates number N1 of termination resistors 12 connected to transmission path 3 (i.e., the number of termination resistors 12 connected to transmission path 3 among termination resistors 12 of device 2) from a result of the detection (total resistance value R1) of detector 15.

This calculation is on the assumption that each termination resistor 12 connected to transmission path 3 has a resistance value equal to characteristic impedance R0 of the differential line of transmission path 3, for example. Respective termination resistors 12 connected to transmission path 3 are connected across two signal lines 3a, 3b of transmission path 3 and are connected in parallel with each other. These preconditions and knowledge of electromagnetism enable calculating number N1 described above from the result of the detection (total resistance value R1) of detector 15. The calculation of number N1 is not here described in detail.

Then, controller 16 performs magnitude comparison between calculated number N1 and threshold Ns. Threshold Ns is two, for example, but is not limited to two. When the magnitude comparison results in that number N1 is equal to or smaller than threshold Ns, controller 16 determines that Ns (e.g., two) or less termination resistors 12 including termination resistor 12 of first device 2A are already connected to transmission path 3. Then, this determination result causes controller 16 to control switch 13 so that termination resistor 12 and transmission path 3 are connected. That is, controller 16 turns on switch 13. Switch 13 is turned on when communication part 10 energizes transmission path 3 with the detection current in Modification 4 as in the above exemplary embodiment, and thus switch 13 is kept on. In contrast, when the magnitude comparison results in that number N1 exceeds threshold Ns, controller 16 determines that more than Ns (e.g., two) termination resistors 12 including termination resistor 12 of first device 2A are already connected to transmission path 3. Then, this determination result causes controller 16 to control switch 13 so that termination resistor 12 and transmission path 3 are disconnected. That is, controller 16 turns off switch 13.

As threshold Ns, an optimum number of termination resistors 12 connected to transmission path 3 can be set. This threshold allows switching between connection and disconnection between termination resistor 12 and transmission path 3 to be controlled so that the optimum number of termination resistors 12 are connected to transmission path 3.

Modification 4 enables control of switching between connection and disconnection between termination resistors 12 and transmission path 3 with switch 13 by the magnitude comparison between number N1 of termination resistors 12 connected to transmission path 3 and threshold Ns (i.e., by simple control).

### (Aspects)

As is apparent from the above-described exemplary embodiment and modifications, the following aspects are disclosed in the present specification.

Communication circuit (6A) of a first aspect includes communication part (10), termination resistor (12), switch (13), detector (15), and controller (16). Communication part (10) is provided in device (2) connected to transmission path (3), and communicates with another communication part (10) provided in another device (2) connected to transmission path (3) through transmission path (3). Termination resistor (12) is connected to transmission path (3). Switch (13) switches between connection and disconnection between termination resistor (12) and transmission path (3). Detector (15) detects total resistance value (R1) of all resistors connected to transmission path (3) in a state where termination resistor (12) and transmission path (3) are connected. Controller (16) controls switching between connection and disconnection between termination resistor (12) and transmission path (3) with switch (13) based on a result of the detection of detector (15).

According to this configuration, total resistance value (R1) of all resistors connected to transmission path (3) is detected, and switching between connection and disconnection between termination resistor (12) and transmission path 3 with switch (13) is controlled based on a result of the detection. Thus, the connection and the disconnection between termination resistor (12) and transmission path (3) can be switched without causing a communication error in communication part (10).

Communication circuit (6A) of a second aspect is configured in the first aspect such that when total resistance value (R1) detected by detector (15) is equal to greater than threshold (Rs), controller (16) controls causing switch (13) to connect termination resistor (12) to transmission path (3). Controller (16) controls causing switch (13) to disconnect termination resistor (12) from transmission path (3) when total resistance value (R1) detected by detector (15) is less than threshold (Rs).

This configuration enables control of switching between connection and disconnection between termination resistor (12) and transmission path (3) with switch (13) by performing magnitude comparison between total resistance value (R1) and threshold (Rs) (i.e., by simple control).

Communication circuit (6A) of a third aspect in the second aspect further includes storage (17) that stores impedance information related to characteristic impedance (R0) of a differential line of transmission path (3). Controller (16) sets threshold (Rs) based on the impedance information stored in storage (17).

This configuration enables optimum threshold (Rs) to be automatically set only by setting the impedance information in storage (17).

Communication circuit (6A) of a fourth aspect is configured in the first aspect such that controller (16) calculates number (N1) of termination resistors (12) connected to transmission path (3) based on a result of the detection of detector (15). Controller (16) controls causing switch (13) to connect termination resistor (12) to transmission path (3) when calculated number (N1) is equal to or smaller than threshold (Rs). Controller (16) controls causing switch (13) to disconnect termination resistor (12) from transmission path (3) when calculated number (N1) exceeds threshold (Rs).

This configuration enables control of switching between connection and disconnection between termination resistor (12) and transmission path (3) with switch (13) by performing magnitude comparison between number (N1) of termination resistors (12) connected to transmission path (3) and threshold (Rs) (i.e., by simple control).

Communication circuit (6A) of a fifth aspect is configured in any one of the first to fourth aspects such that communication part (10) energizes transmission path (3) with a detection current. Detector (15) calculates total resistance value (R1) of transmission path (3) based on voltage value (V1) of voltage generated in termination resistor (12) by the detection current and current value (I1) of the detection current in a state where termination resistor (12) and transmission path (3) are connected.

This configuration enables total resistance value (R1) of all resistors connected to transmission path (3) to be calculated by a simple method. Communication circuit (6A) of the present disclosure is compatible with device (2) that operates with a current flowing with high impedance as device (2) because all resistors are detected by energizing transmission path (3) with the detection current.

Communication circuit (6A) of a sixth aspect is configured in the fifth aspect such that communication part (10) energizes transmission path (3) with the detection current when power of device (2) is turned on.

This configuration enables switching between connection and disconnection between termination resistor (12) and transmission path (3) with switch (13) when the power of device (2) is turned on.

Communication circuit (6A) of a seventh aspect is configured in any one of the first to sixth aspects such that detector (15) periodically detects total resistance value (R1) of transmission path (3) in a state where termination resistor (12) and transmission path (3) are connected. Every time detector (15) detects total resistance value (R1) of transmission path (3), controller (16) controls switching between connection and disconnection between termination resistor (12) and switch (13) with switch (13) based on a result of the detection of detector (15).

This configuration enables periodical switching between connection and disconnection between termination resistor (12) and transmission path (3) with switch (13). As a result, even when device (2B) without a function of switching termination resistor (12) to disconnection is connected to transmission path (3) after device (2A) including communication circuit (6A) of the present disclosure is connected to transmission path (3), number (N1) of termination resistors (12) connected to transmission path (3) can be appropriately adjusted by switching between connection and disconnection between termination resistor (12) and transmission path (3) in device (2A) of the present disclosure.

Communication circuit (6A) of an eighth aspect in any one of the first to seventh aspects further includes manual switch (18) that switches between an automatic mode and a forcible mode. The automatic mode allows controller (16) to control switching between connection and disconnection between termination resistor (12) and transmission path (3) with switch (13) based on a result of the detection of detector (15). The forcible mode allows controller (16) to control switch (13) to cause termination resistor (12) and transmission path (3) to be forcibly connected.

This configuration enables switching between the automatic mode and the forcible mode to be performed by manual switch (18). When an operation mode of communication circuit (6A) is switched to the forcible mode, termination resistor (12) can be forcibly connected to transmission path (3). Consequently, when device (2A) including communication circuit (6A) of the present disclosure is connected to an end of transmission path (3), termination resistor (12) and transmission path (3) can be forcibly connected by the forcible mode. That is, termination resistor (12) of device (2) (device (2) including communication circuit (6A) of the present disclosure) connected to the end of transmission path (3) can be forcibly connected to transmission path (3).

Communication circuit (6A) of a ninth aspect in any one of the first to ninth aspects includes a plurality of termination resistors (12). The plurality of termination resistors (12) has respective resistance values different from each other. Switch (13) selects one of the plurality of termination resistors (12), and switches between connection and disconnection between selected termination resistor (12) and transmission path (3).

This configuration enables optimum termination resistor (12) among the plurality of termination resistors (12) to be connected to transmission path (3). Consequently, communication circuit (6A) of the present disclosure can be made to correspond to various transmission paths (3) different in characteristic impedance (R0) of the differential line.

Device (2) of a tenth aspect includes communication circuit (6A) of any one of the first to ninth aspects and functional part (5). Functional part (5) is connected to communication part (10) of communication circuit (6A) to exchange a signal with communication part (10), and executes a predetermined function.

This configuration enables providing device (2) used by being connected to transmission path (3), device (2) including e communication circuit (6A) of the present disclosure.

Communication system (1) of an eleventh aspect includes transmission path (3) and three or more devices (2). Three or more devices (2) are connected to transmission path (3). At least one device (2) of three or more devices (2) is device (2A) of the tenth aspect, and the rest of the devices (2) include respective termination resistors (12) that are always connected to transmission path (3).

This configuration enables providing communication system (1) including device (2) of the present disclosure.

A method for controlling communication circuit (6A) according to a twelfth aspect is for controlling communication circuit (6A) including communication part (10), termination resistor (12), and switch (13). Communication part (10) is provided in device (2) connected to transmission path (3), and communicates with another communication part (10) provided in another device (2) connected to transmission path (3) through transmission path (3). Termination resistor (12) is connected to transmission path (3). Switch (13) switches between connection and disconnection between termination resistor (12) and transmission path (3). The method for controlling communication circuit (6A) includes a detection step and a control step. The detection step is performed to detect total resistance value (R1) of all resistors connected to transmission path (3) in a state where termination resistor (12) and transmission path (3) are connected. The control step is performed to control switching between connection and disconnection between termination resistor (12) and transmission path (3) with switch (13) based on a result of the detection in the detection step.

According to this configuration, total resistance value (R1) of all resistors connected to transmission path (3) is detected, and switching between connection and disconnection between termination resistor (12) and transmission path 3 with switch (13) is controlled based on a result of the detection. Thus, the connection and the disconnection between termination resistor (12) and transmission path (3) can be switched without causing a communication error.

A program of a thirteenth aspect causes one or more processors to execute the method for controlling communication circuit (6A) of the twelfth aspect.

This configuration enables providing a program for causing one or more processors to execute the method for controlling communication circuit (6A).

### INDUSTRIAL APPLICABILITY

The communication circuit, the device, the communication system, the method for controlling the communication circuit, and the program of the present disclosure have an advantage that connection and disconnection between the termination resistor and the transmission path can be switched without causing a communication error. Thus, the communication circuit, the device, the communication system, the method for controlling the communication circuit, and the program of the present disclosure are industrially useful.

### REFERENCE MARKS IN THE DRAWINGS

1: communication system
2: device
2A: first device
2B: second device
3: transmission path
6, 6A, 6B: communication circuit
10: communication part
12, 12a, 12b, 12c: termination resistor
13, 13a, 13b, 13c, 13D: switch
15: detector
16: controller
17: storage
18: manual switch
I1: current value
N1: number
Ns: threshold
R0: characteristic impedance of differential line
R1: total resistance value
Rs: threshold
V1: voltage value

## Claims

1. A communication circuit comprising:
a communication part that is provided in a device connected to a transmission path, and communicates with another communication part through the transmission path, the other communication part being provided in another device connected to the transmission path;
a termination resistor connected to the transmission path;
a switch that switches between connection and disconnection between the termination resistor and the transmission path;
a detector that detects a total resistance value of all resistors connected to the transmission path in a state where the termination resistor and the transmission path are connected; and
a controller that causes the switch to perform switching between connection and disconnection between the termination resistor and the transmission path based on a result of the detection of the detector.

2. The communication circuit according to Claim 1, wherein
the controller causes the switch to connect the termination resistor to the transmission path when the total resistance value detected by detector is equal to or greater than a threshold, and
the controller causes the switch to disconnect the termination resistor from the transmission path when the total resistance value detected by the detector is less than the threshold.

3. The communication circuit according to Claim 2, further comprising a storage that stores impedance information related to characteristic impedance of a differential line of the transmission path,
wherein the controller sets the threshold based on the impedance information stored in the storage.

4. The communication circuit according to Claim 1, wherein
the controller calculates a number of termination resistors connected to the transmission path based on a result of the detection of the detector,
the controller causes the switch to connect the termination resistor to the transmission path when the number calculated is equal to or smaller than the threshold, and
the controller causes the switch to disconnect the termination resistor from the transmission path when the number calculated exceeds the threshold.

5. The communication circuit according to Claim 1, wherein
the communication part energizes the transmission path with a detection current, and
the detector calculates the total resistance value of the transmission path based on a voltage value of voltage generated in the termination resistor by the detection current and a current value of the detection current in a state where the termination resistor and the transmission path are connected.

6. The communication circuit according to Claim 5, wherein the communication part energizes the transmission path with the detection current when power of the device is turned on.

7. The communication circuit according to Claim 1, wherein
the detector periodically detects the total resistance value of the transmission path in a state where the termination resistor and the transmission path are connected, and
every time the detector detects the total resistance value of the transmission path, the controller causes the switch to perform switching between connection and disconnection between the termination resistor and the switch based on a result of the detection of the detector.

8. The communication circuit according to Claim 1, further comprising a manual switch that switches between an automatic mode and a forcible mode,
wherein
the automatic mode allows the controller to cause the switch to perform switching between connection and disconnection between the termination resistor and the transmission path based on a result of the detection of the detector, and
the forcible mode allows the controller to control the switch to cause the termination resistor and the transmission path to be forcibly connected.

9. The communication circuit according to Claim 1, comprising a plurality of the termination resistors,
wherein
the plurality of the termination resistors has respective resistance values different from each other, and
the switch selects one of the plurality of the termination resistors, and switches between connection and disconnection between the selected termination resistor and the transmission path.

10. A device comprising:
the communication circuit according to Claim 1; and
a functional part that is connected to the communication part of the communication circuit to exchange a signal with the communication part, and executes a predetermined function.

11. A communication system comprising:
a transmission path; and
three or more devices connected to the transmission path,
wherein
at least one device of the three or more devices is the device according to Claim 10, and
the rest of the three or more devices include respective termination resistors that are always connected to the transmission path.

12. A method for controlling a communication circuit, the communication circuit including: a communication part that is provided in a device connected to a transmission path, and that communicates with another communication part provided in another device connected to the transmission path through the transmission path; a termination resistor that is connected to the transmission path; and a switch that switches between connection and disconnection between the termination resistor and the transmission path, the method comprising:
a detection step of detecting a total resistance value of all resistors connected to the transmission path in a state where the termination resistor and the transmission path are connected; and
a control step of causing the switch to perform switching between connection and disconnection between the termination resistor and the transmission path based on a result of the detection in the detection step.

13. A program for causing one or more processors to execute the method for controlling a communication circuit according to Claim 12.
